# EUROPEAN PATENT APPLICATION

(11) **EP 1 363 352 A1**
(43) Date of publication of application: **19.11.2003**
(21) Application number: 03010705.6
(22) Date of filing: 13.05.2003
(51) Int. Cl.: H01Q 1/32, H01Q 21/30, H01Q 25/00, H04J 14/02

(54) **Vehicle antenna system with fiber-optic signal transmission**

(30) Priority: 14.05.2002 JP 2002139103
(71) Applicant: ALPS ELECTRIC CO., LTD., Tokyo 145-8501 (JP)
(72) Inventor: Sasagawa, Shinichi, Ota-ku, Tokyo 145-8501 (JP); Sato, Makoto, Ota-ku, Tokyo 145-8501 (JP); Katoh, Masashi, Ota-ku, Tokyo 145-8501 (JP)
(74) Representative: Klunker . Schmitt-Nilson . Hirsch

(57) **Abstract**

An antenna system comprising antennas (11a-11d) mounted on a vehicle, amplifiers (12a-12d) for amplifying radio signals received by the antennas (11a-11d), light emitting parts (14a-14d) with wavelengths different from one another that convert the amplified radio signals into optical signals and that output the optical signals, multiplexing means (21b-21d) that multiplex the optical signals into a single optical signal, a fiber-optic cable (15d) that is installed in the vehicle and that is used for transmitting the single optical signal,
demultiplexing means (22a-22d) for demultiplexing the single optical signal transmitted through the fiber-optic cable (15d) and for outputting the demultiplexed optical signals, and light receiving parts (16a-16d) that receive the optical signals, convert the optical signals to electrical signals, and output the electrical signals.

## Description

### BACKGROUND OF THE INVENTION

### 1. Field of the Invention

The present invention relates to an antenna system suitable to be mounted on a vehicle, such as a motor vehicle, a railway vehicle, and so forth.

### 2. Description of the Related Art

Conventionally, the global positioning system (GPS) has been used as a car navigation device for displaying the current position or the traveling direction of a motor vehicle. A GPS device detects a radio wave transmitted from an artificial satellite and obtains car position information for displaying the current position and the traveling direction of a running motor vehicle. There has been a growing trend for many systems, including a system for receiving satellite broadcasts, an emergency telephone system, and so forth, to be installed in motor vehicles. Therefore, an antenna is provided for each system. These antennas are installed on the roof or in the trunk of the motor vehicle, depending on the space required, the reception environment, and so forth. Therefore, in general, the antennas are installed so as to be some distance from the main body of their associated system, and the antennas are connected to the main bodies by coaxial cables.

In the above, the GPS device is given as an example of the related art. In such a case, an antenna system is installed in a motor vehicle. An antenna of the antenna system receives a radio signal and the radio signal is transmitted from the antenna to a GPS receiver of the GPS main body. For example, if the antenna is installed on the roof of the motor vehicle, an electrical cable such as a coaxial cable is provided so as to extend from the position where the antenna is installed to the trunk or to the driver's seat of the motor vehicle, where the main body of the GPS device is installed. In this case, the antenna and the GPS receiver are connected by an electrical cable, whereby the radio signal, which is received by the antenna on the roof, is transmitted to the GPS receiver in the main body of the GPS device through the electrical cable. Then, the GPS receiver detects a radio wave transmitted from an artificial satellite by using the radio signal transmitted through the electrical cable.

However, since the electrical cable is used for transmitting the radio signal in the case of the above-described antenna system, the radio signal may be affected by electromagnetic noise outside the electrical cable while the radio signal is transmitted through the electrical cable, whereby the GPS receiver may not be able to correctly detect the radio wave transmitted from the artificial satellite because of the electromagnetic noise.

In some cases, the effects of the external electromagnetic noise on the motor vehicle or the railway vehicle may be increased according to the location of the traveling vehicle. Therefore, it is desired that the effects of electromagnetic noise be reduced. Further, the above-described vehicles have many other devices that can generate electromagnetic noise. These devices may include an engine, a drive motor, and so forth. Therefore, it is also desired to prevent the effects of the electromagnetic noise.

### SUMMARY OF THE INVENTION

Accordingly, it is an object of the present invention to provide an antenna system that can protect a radio signal received by the antenna thereof, which is mounted on a vehicle, from the effect of electromagnetic noise outside a transmission cable while the radio signal is transmitted through the transmission cable.

According to an aspect of the present invention, an antenna system of the present invention comprises an antenna mounted on a vehicle, an amplifying unit for electrically amplifying a radio signal received by the antenna, and a light emitting unit that converts the amplified radio signal into an optical signal and that outputs the optical signal. The antenna system further comprises a fiber-optic cable installed in the vehicle and which is used for transmitting the optical signal and a light receiving unit that receives the optical signal transmitted through the fiber-optic cable, converts the optical signal to an electrical signal, and outputs the electrical signal.

Thus, according to the present invention, the radio signal received by the antenna is converted into the optical signal and is transmitted through the fiber-optic cable. Therefore, the optical signal is prevented from being affected by electromagnetic noise outside the fiber-optic cable while the optical signal is transmitted through the fiber-optic cable.

Preferably, in the antenna system of the present invention, the light emitting unit is provided for each of a plurality of the antennas, and the plurality of light emitting units generates optical signals with wavelengths that are different from one another and a plurality of the light receiving units is provided so as to be paired with the plurality of light emitting units. The antenna system may further comprise at least one multiplexing unit that multiplexes the optical signals output from the plurality of light emitting units into a single optical signal, which is transmitted through the fiber-optic cable. The antenna system may further comprise a demultiplexing unit provided for each of the plurality of light receiving units. The demultiplexing unit is provided for demultiplexing the optical signal with the wavelength generated by the light emitting unit, which is paired with the light receiving unit, from the single optical signal transmitted through the fiber-optic cable and for outputting the demultiplexed optical signal to the light receiving unit.

According to the present invention, the radio signals received by the antennas are multiplexed and are transmitted through the single fiber-optic cable. Therefore, the amount of cable installed is reduced and the installation of the fiber-optic cable becomes easier. Therefore, the weight of the antenna system is reduced.

Preferably, the antenna system of the present invention further comprises a frequency conversion unit for downconverting the frequency of the radio signal to a predetermined intermediate frequency.

According to the present invention, even though the frequency of the radio signal received by the antenna is not within the frequency range of the optical signal that can be emitted by the light emitting unit, the radio signal frequency can be used when it is reduced by the frequency conversion unit.

Preferably, the antenna system of the present invention further comprises an encoding unit for encoding the radio signal according to a predetermined coding scheme and a decoding unit for decoding the signal output from the light receiving unit according to the predetermined coding scheme.

According to the present invention, the radio signal is encoded and transmitted. Therefore, influences on the optical signal transmission, e.g., transmission losses, are reduced and the optical signal can be received better by a receiver.

Recently, since the number of devices mounted in a vehicle has been increasing, it has become increasingly difficult to provide space in the vehicle for mounting the devices therein. In such a case, the antenna system of the present invention is effective, because, in this antenna system, such devices are integrated so that the main body of the integrated devices can be mounted in the trunk or the like and the antennas are integrated so that they can be accommodated in a single housing.

### BRIEF DESCRIPTION OF THE DRAWINGS

FIG. 1 illustrates an example configuration of an antenna system according to a first embodiment of the present invention;
FIG. 2 illustrates an example configuration of an antenna system according to a second embodiment of the present invention;
FIG. 3 illustrates an example configuration of an antenna system wherein the antennas shown in FIG. 2 are configured as a single antenna unit;
FIG. 4 illustrates a method of mounting the above-described antenna unit; and
FIG. 5 is a block diagram illustrating an example configuration of an antenna system according to a third embodiment of the present invention.

### DESCRIPTION OF THE PREFERRED EMBODIMENTS

Embodiments of the present invention will now be described with reference to the drawings.

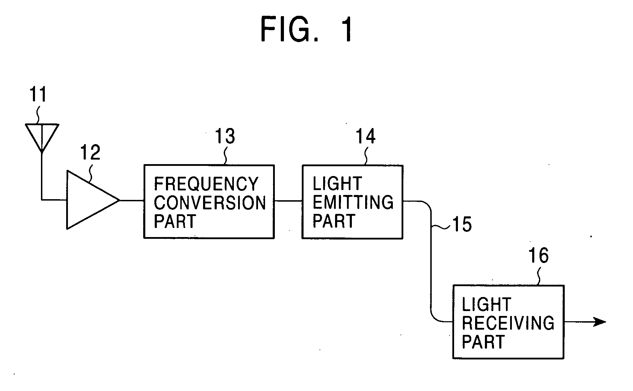

FIG. 1 shows an example configuration of an antenna system according to a first embodiment of the present invention. The antenna system in this drawing is mounted in a motor vehicle and is used in a GPS-based car navigation device.

As shown in FIG. 1, the antenna system comprises an antenna 11, an amplifier 12, a frequency conversion part 13, a light emitting part 14, a fiber-optic cable 15, and a light receiving part 16. The antenna 11 is used for receiving a radio signal transmitted from an artificial satellite. The amplifier 12 electrically amplifies the radio signal received by the antenna 11 to a predetermined level. The frequency conversion part 13 down-converts the frequency of the amplified radio signal to a predetermined intermediate frequency (IF) and outputs the resulting radio signal. The light emitting part 14 converts the signal output from the frequency conversion part 13 to an optical signal and outputs the optical signal. The antenna 11, the amplifier 12, the frequency conversion part 13, and the light emitting part 14 are installed on an antenna-mounting position. In this example, these elements are mounted in an antenna case formed on the roof of the motor vehicle. A light-emitting diode (LED) can be used, for example, as a light emitting element of the light emitting part 14.

The fiber-optic cable 15 is provided so as to extend from the roof to the driver's seat, where the main body of a GPS device is installed. This fiber-optic cable 15 connects the light emitting part 14, which is mounted in the antenna case, to the light receiving part 16, which is provided near the main body of the GPS device. The light receiving part 16 receives the optical signal transmitted through the fiber-optic cable 15, converts the optical signal to an electrical signal, and outputs the electrical signal to the main body of the GPS device. A GPS receiver provided in the main body of the GPS device detects the radio wave transmitted from the artificial satellite by using the electrical signal input from the receiving part 16. A photo diode (PD), for example, can be used as a light receiving element of the light receiving part 16.

As has been described in the first embodiment, the radio signal received by the antenna 11 is converted into the optical signal and is transmitted through the fiber-optic cable 15, which is provided in the motor vehicle. Therefore, the optical signal is protected from electromagnetic noise outside the fiber-optic cable 15 while it is transmitted.

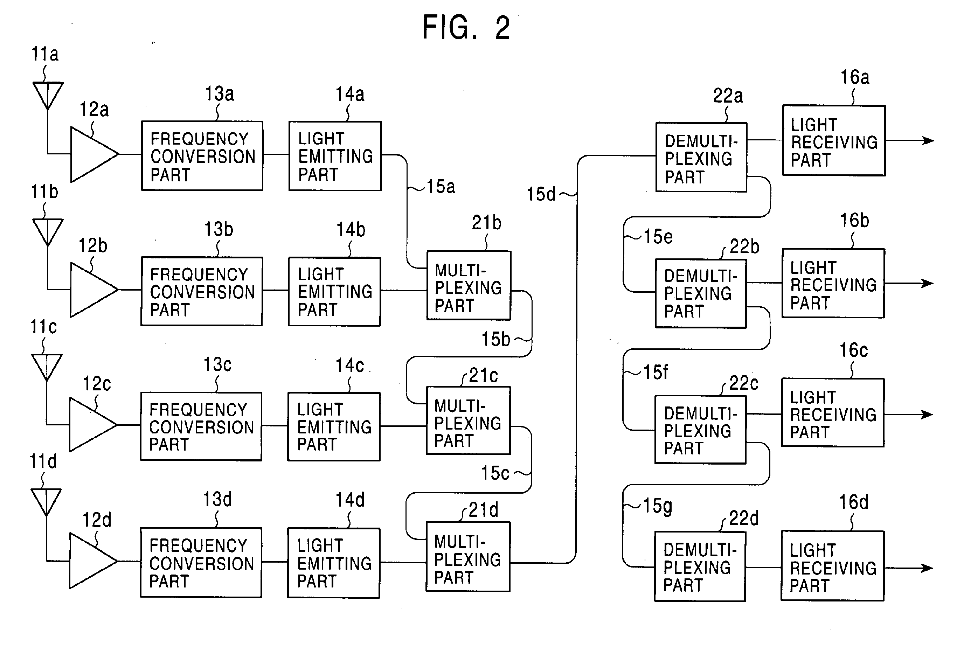

Next, a second embodiment of the present invention will be described. An antenna system according-to the second embodiment multiplexes radio signals received by a plurality of antennas and transmits the multiplexed radio signals on a single fiber-optic cable. FIG. 2 illustrates an example configuration of the antenna system of the second embodiment. As shown in this drawing, this antenna system comprises four antennas 11a to 11d. Four radio signals are received by these antennas 11a to lid and are multiplexed. The multiplexed radio signals are transmitted through a fiber-optic cable 15d. The antenna 11a receives GPS radio waves, the antenna 11b receives radio waves for a satellite digital audio radio service (SDARS), the antenna 11c receives radio waves for a vehicle information communication system (VICS), and the antenna 11d receives radio waves for dedicated short range communication (DSRC).

As shown in FIG. 2, on the optical signal transmission side, amplifiers 12a to 12d, frequency conversion parts 13a to 13d, and light-emitting parts 14a to 14d are provided for the antennas 11a to 11d. These light emitting parts 14a to 14d emit optical signals. The wavelengths of the optical signals vary from λa to λd. The light emitting parts 14b to 14d are connected to multiplexing parts 21b to 21d. The multiplexing part 21b multiplexes an optical signal input from a fiber optic cable 15a and another optical signal input from the light emitting part 14b, and outputs the multiplexed optical signals to a fiber optic cable 15b. The multiplexing part 21c multiplexes an optical signal input from a fiber optic cable 15b and another optical signal input from the light emitting part 14c, and outputs the multiplexed optical signals to a fiber optic cable 15c. The multiplexing part 21d multiplexes an optical signal input from a fiber optic cable 15c and another optical signal input from the light emitting part 14d, and outputs the multiplexed optical signals to the fiber optic cable 15d.

Subsequently, the optical signals with the four wavelengths λa to λd output from the light emitting parts 14a to 14d are multiplexed and transmitted to an optical signal receiving side through the fiber-optic cable 15d.

Four demultiplexing parts 22a to 22d and light receiving parts 16a to 16d that are connected thereto are provided on the optical signal receiving side. The light receiving parts 16a to 16d are paired with the light emitting parts 14a to 14d, respectively.

The demultiplexing part 22a demultiplexes only the optical signal with the wavelength λa from the optical signals input from the fiber-optic cable 15d and outputs the demultiplexed signal to the light receiving part 16a. The optical signals other than the optical signal with the wavelength λa are output to a fiber-optic cable 15e. The light receiving part 16a converts the optical signal with the wavelength λa into an electrical signal and outputs the electrical signal to the main body of the GPS device.

The demultiplexing part 22b demultiplexes only the optical signal with the wavelength λb from the optical signals input from the fiber-optic cable 15e and outputs the demultiplexed signal to the light receiving part 16b. The optical signals other than the optical signal with the wavelength λb are output to a fiber-optic cable 15f. The light receiving part 16b converts the optical signal with the wavelength λb to an electrical signal and outputs the electrical signal to the main body of an SDARS receiver.

The demultiplexing part 22c demultiplexes only the optical signal with the wavelength λc from the optical signals input from the fiber-optic cable 15f and outputs the demultiplexed signal to the light receiving part 16c. The other signal, that is, the signal with the wavelength λd is output to a fiber-optic cable 15g. The light receiving part 16c converts the optical signal with the wavelength λc to an electrical signal and outputs the electrical signal to the main body of a VICS device.

The demultiplexing part 22d demultiplexes the optical signal with the wavelength λd input from the fiber-optic cable 15g and outputs the demultiplexed signal to the light receiving part 16d. The light receiving part 16d converts the optical signal with the wavelength λd to an electrical signal and outputs the electrical signal to the main body of a DSRC receiver.

As described in the second embodiment, the radio signals received by the antennas are multiplexed and are transmitted through the single fiber-optic cable. Therefore, the amount of installed cable required is reduced, whereby the installation of the fiber-optic cable is made easier.

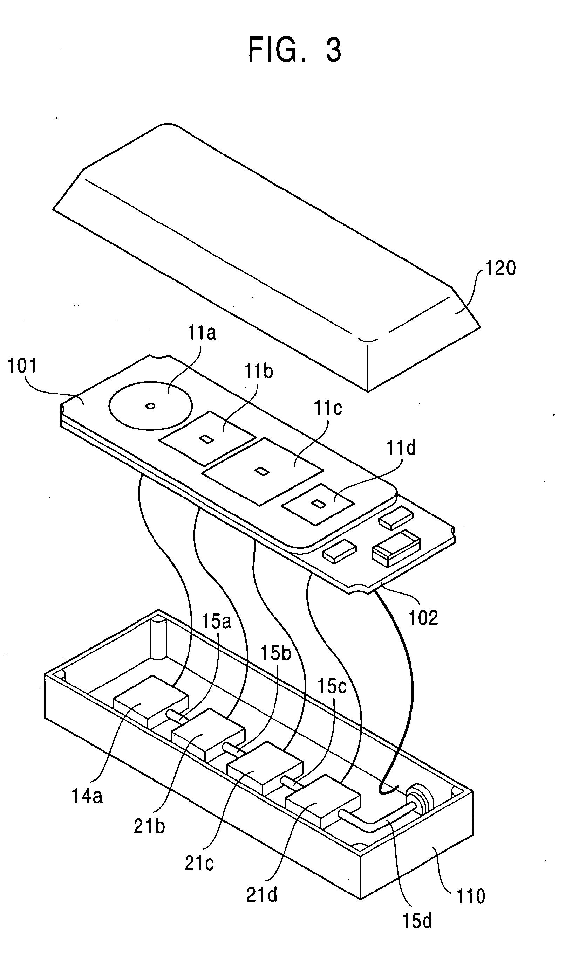

Further, since restrictions on the length of the cable are relaxed by the use of the fiber-optic cable, the antennas of the above-described systems are configured as one antenna unit and can be installed in one place, such as at a predetermined position on the roof. FIG. 3 shows an example antenna unit comprising the antennas 11a to 11d shown in FIG. 2. As shown in FIG. 3, the antennas 11a to 11d are mounted in a single antenna unit 101. The amplifiers 12a to 12d, the frequency conversion parts 13a to 13d, the light emitting parts 14a to 14d, and the multiplexing parts 21b to 21d are mounted in a single circuit unit 102. FIG. 3 separately illustrates only the light emitting part 14a and the multiplexing parts 21b to 21d for convenience of description.

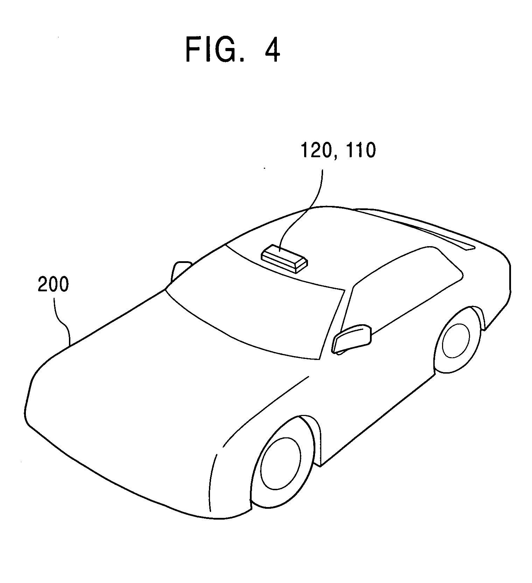

The antenna unit 101 and the circuit unit 102 are connected and accommodated in an antenna case 110. The light emitting part 14a and the multiplexing part 21b of the circuit unit 102 are connected to each other by the fiber-optic cable 15a, the multiplexing part 21b and the multiplexing part 21c are connected by the fiber-optic cable 15b, and the multiplexing part 21c and the multiplexing part 21d are connected by the fiber-optic cable 15c. The fiber-optic cable 15d, which is connected to the multiplexing part 21d, is laid from the point where the antenna case 110 is installed to the point where the main body of the antenna system is installed, for example, in the trunk or the like. The antenna case 110 is covered by an antenna cover 120 and is installed on the roof of a motor vehicle 200, as shown in FIG. 4, for example.

Thus, the antennas of the above-described systems can be configured as a single antenna unit. Further, the circuits on the transmission side can be configured as the above-described single circuit unit.

As has been described in the above-described embodiments, the frequency conversion parts are provided. However, if the frequencies of radio signals received by the antennas are within the frequency ranges of optical signals that can be emitted by the light emitting elements of the light emitting parts, the frequency conversion parts need not be provided.

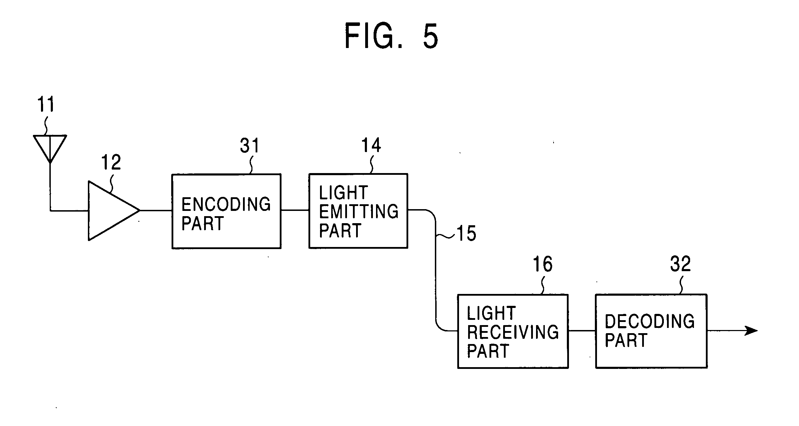

Next, a third embodiment of the present invention will be described. An antenna system according to this embodiment encodes a radio signal and transmits the encoded radio signal. FIG. 5 shows an example configuration of this antenna system. As shown in this drawing, the antenna system has an encoding part 31 on the optical signal transmission side according to the first embodiment. The antenna system further has a decoding part 32 on the optical signal receiving side according to the first embodiment.

The encoding part 31 encodes the radio signal, which is amplified by the amplifier 12, in a predetermined coding scheme and outputs the encoded radio signal. The encoded radio signal is converted into an optical signal by the light emitting part 14 and is transmitted through the fiber-optic cable 15. On the optical signal receiving side, the transmitted optical signal, that is, the encoded signal, is received and is converted into an electrical signal by the light receiving part 16. Then, the electrical signal is decoded and output by the decoding part 32.

Thus, according to the third embodiment, radio signals are encoded and converted into optical signals for transmission. Subsequently, influences on the optical signal transmission, e.g., transmission losses, are reduced and the optical signals are received better by a receiver. Further, signal multiplexing can be performed by a single light source.

The antenna system in the above-described embodiment can be used for various systems other than the above-described radio wave receiving systems such as the GPS device or the like. For example, the antenna system can be used for an automotive information provider such as an electronic toll collection system (ETC). The antenna can also be used for a communication system such as a movile telephone system. Further, the antenna system can also be used for a radio wave transmission system by providing an output part in the antenna unit thereof.

Although the antenna systems according to the above-described embodiments are used for a motor vehicle, they can be used for other vehicles such as railway vehicles or the like.

The embodiments of the present invention have been described with reference to the attached drawings. However, the specific configuration of the present invention is not limited to the above-described embodiments, but can be altered without departing from the scope of the invention.

## Claims

1. An antenna system comprising:
an antenna mounted on a vehicle;
amplifying means for electrically amplifying a radio signal received by the antenna;
light emitting means that converts the amplified radio signal into an optical signal and that outputs the optical signal;
a fiber-optic cable installed in the vehicle and which is used for transmitting the optical signal; and
light receiving means that receives the optical signal transmitted through the fiber-optic cable, converts the optical signal to an electrical signal, and outputs the electrical signal.

2. An antenna system according to Claim 1, wherein the light emitting means is provided for each of a plurality of the antennas, and the plurality of light emitting means generates optical signals with wavelengths that are different from one another, and
a plurality of the light receiving means is provided so as to be paired with the plurality of light emitting means,
and wherein the antenna system according to Claim 1 further comprises:
multiplexing means that multiplexes the optical signals output from the plurality of light emitting means into a single optical signal, which is transmitted through the fiber-optic cable; and
demultiplexing means provided for each of the plurality of light receiving means for demultiplexing the optical signal with the wavelength generated by the light emitting means, which is paired with the light receiving means, from the single optical signal transmitted through the fiber-optic cable and for outputting the demultiplexed optical signal to the light receiving means.

3. An antenna system according to Claim 1 or Claim 2, further comprising frequency conversion means for downconverting the frequency of the radio signal to a predetermined intermediate frequency.

4. An antenna system according to Claim 1 or Claim 2, further comprising:
encoding means for encoding the radio signal according to a predetermined coding scheme; and
decoding means for decoding the signal output from the light receiving means according to the predetermined coding scheme.
